**Europäisches Patentamt**

**European Patent Office**

**Office européen des brevets**

(19)

(11) Publication number: **0 376 695**
**A2**

(12) # EUROPEAN PATENT APPLICATION

(21) Application number: **89313610.1**

(22) Date of filing: **27.12.89**

(51) Int. Cl.5: **G06F 15/20**

(30) Priority: **30.12.88 US 292551**

(43) Date of publication of application:
**04.07.90 Bulletin 90/27**

(84) Designated Contracting States:
**AT BE CH DE ES FR GB IT LI LU NL SE**

(71) Applicant: **DOCTORS' COMMUNICATIONS SERVICES, LTD.**
**906 University Place**
**Evanston Illinois 60201(US)**

(72) Inventor: **Guth, Gary R.**
**857 Woodbind Road**
**Highland Park Illinois 60035(US)**
Inventor: **Hobor, Michael J.**
**384 Prospect Avenue**
**Highland Park Illinois 60035(US)**

(74) Representative: **Cross, Rupert Edward Blount et al**
**BOULT, WADE & TENNANT 27 Furnival Street London EC4A 1PQ(GB)**

(54) **Operator-defined dialog boxes and processing logic for computer systems.**

(57) A computer system is provided for obtaining and recording information by presenting selected data, warnings and inquiries on a computer display monitor, prompting selected responses to the warnings and inquiries as desired, and integrating newly obtained information with other data to create a completed document. The system creates "dialog boxes" which are defined by an expert operator. To create a dialog box, the operator defines a location in the document in which a question is to be asked or information provided to the user. The operator also defines the question or information, and can also provide several responses to the question. The operator can specify the number of answers which can be accepted in response to an inquiry, and can specify that certain information, such as a date or the like, be provided.

The dialog boxes can be arranged in an information tree structure having multiple branches. The branches of the tree which are actually used are determined by the responses received to inquiries as information is obtained. Macros can also be integrated into the tree structure, if desired. The operator's selection of sequential responses to the questions thereby determines how the document develops. As questions are answered, the information obtained is inserted into the text of the completed document, and the inquiries are erased. In this manner, someone having expert knowledge in a field other than computer programming can develop a system which persons with less knowledge in the field can use to obtain information and assemble it in an integrated and easy to understand narrative text format.

Fig. 1

## OPERATOR-DEFINED DIALOG BOXES AND PROCESSING LOGIC FOR COMPUTER SYSTEMS

This invention relates to methods and apparatus for creating narrative text documents by using operator-defined dialog boxes. The dialog boxes store operator-defined data, including inquiries for information (in some cases accompanied by a menu of potential answers) and warnings arranged in an operator-defined information tree structure. Predetermined access to and use of the data is also provided. The information obtained in response to the inquiries and warnings is recorded in place of the inquiries and warnings. In this manner, the newly obtained information is integrated into the data in a desired manner, to create a completed narrative document, such as a narrative, history, analysis or the like.

More particularly, the invention relates to a computer system for creating information records for the medical field. The system includes a facility for using dialog boxes to complete charts and other forms used in medical practices, including patient background charts, clinical reports, patient visit information charts, findings and treatment reports and physician's instructions.

Physicians, attorneys and others often must obtain and record extensive, detailed information from a patient or client. That information can include general background information and situation specific information which itself determines further information needs. For example, a physician examining a patient for an annual physical might find an abnormal heart rate and in consequence might determine that specific information about heart murmurs is also needed. Such information must be complete and accurate, and all further information which is needed must be obtained.

Physicians often obtain information from a patient through an interview, examination, or both, and 1) either write up a report themselves (which is a tedious, time-consuming task, and can result in cryptic notes which are incomplete), or 2) dictate a report which is transcribed later by someone else and subsequently reviewed by the physician for accuracy (which is also time-consuming, and is relatively costly). Neither of these processes insure that all inquiries and examinations are made, however, or that all needed information is recorded clearly for later use. For instance, to save time physicians frequently record only abnormal findings, even though subsequent work with the patient (or a legal challenge) may make it obvious that normal findings should also be documented in detail. Also, associate physicians and colleagues frequently have difficulty reading hand-written reports. Another problem with writing and dictating is that those processes are not interactive, i.e., the physician prepares the document essentially alone, and when tired or under time pressure (a common occurrence), can easily forget or omit tasks which should be performed, or facts which should be recorded. There is a need, therefore, for systems for recording such information which are relatively efficient, fast and cost effective, and at the same time produce more accurate results. Such systems should preferably be interactive to provide reminders and questions and thus insure completeness and quality.

Physicians, attorneys and others must keep abreast of new developments in their field, and incorporate those developments into their practice. Thus, there is a need for systems which enable responsible individuals to learn of new developments in their field of expertise. Such systems should bring new developments to the individual's attention automatically at the time the information is needed.

There is also a need for record-keeping systems to be flexible and adaptable to various fields, such as law, insurance or any other field. Such systems should also be flexible and adaptable to individual needs, work patterns, and record keeping styles of practitioners in any field, because individual practitioners working in the same field, and even in the same office, may have different needs and preferences for a particular situation.

Charts and forms can be developed by physicians, attorneys and others having expertise in a particular field, to identify information which is needed for a particular reason, and to insure that all needed information is obtained. The charts or forms can be used by the person who developed them, or by others having less expertise in the field. For example, a doctor can develop a form or chart to be used in the initial interview for all new patients, and the form or chart can be completed by that doctor, another doctor, or someone on the staff who is not a doctor. The form or chart helps insure that certain needed information is sought from every new patient, regardless of the level of expertise of the person who completes the form or chart.

If a form is printed, all information which could be needed must be included in the printed form, even if some of the requested information is not appropriate for a particular situation. For example, if a new patient does not complain of chest pains, a simple entry on the form to that effect will suffice, and the interrogator can proceed immediately to another section of the form. If the patient does complain of chest pains, however, a potentially very large number of additional questions must be asked before proceeding to the next section of the form. This is a primitive form of an information "tree" which guides the user through a series of inquiries as information is obtained. The "branches" of the tree which are followed are sometimes determined by responses received to previous questions. Since the printed form must contain all of the possible inquiries, or branches of the tree, however, the form is likely to become relatively long and cumbersome, and increasingly difficult to use as it becomes more detailed. For this reason, an information tree structure is inefficient when used in a printed form, and more efficient systems are needed.

Word processing systems have been developed which enable an operator to enter a document into volatile memory (RAM), edit the document as desired, and store it in a mass memory, such as a hard disk drive or other magnetic memory. The document can be a blank form, for example, which can be retrieved when desired. Information can be recorded to complete the form, and the completed form can be printed or stored in memory. The original, blank form can be retained in mass memory for later use.

In known word processing systems, the operator can select a character and instruct the system to search for the next appearance of that character in the document. When the system finds the next selected character, it places the cursor at that character and awaits further commands. In some systems, the operator can instruct the system to automatically replace the selected character with another character or set of characters. However, the operator cannot use the system to cause operator-defined inquiries or warnings to appear automatically in a window on the screen when the system locates the selected character in the document. The system also cannot present in the window a menu of operator-defined responses to the inquiries, or determine how the selection of any of those answers controls access to subsequent parts of the document or its contents. This limits the usefulness of the system because the operator cannot create documents which can be easily used by others who are less well trained or less knowledgeable in the field to which the document pertains. Thus, there is a need for systems which the operator can use to cause operator-defined inquiries, warnings and the like to appear on the screen in a window when a selected character is located in a document. There is also a need for such systems which have a fast, efficient information tree structure which changes the document's configuration and information requirements in response to the information received from prior inquiries.

Some available word processing systems have a "macro" facility which allows the operator to define a series of instructions which the computer will perform upon receipt of a specified command. The macros are also stored in the system's magnetic memory for retrieval and execution as desired. Macros are helpful for inserting text in forms designed for repeated use, because they can be defined by the program user. However, existing systems which permit macros require the user to know what the macro contains, what it is called, where in the document the macro should be invoked, and what commands are used to invoke it. For these reasons, it is difficult for an individual who did not create the macros to use them. There is a need, therefore, for macro systems which can be invoked automatically at desired times, without the user having specific knowledge as to the content of the macros, their names, their locations or the manner in which they are invoked.

It is difficult for an individual (sometimes referred to herein as an "expert" or an "operator") with expertise in a field other than computer programming to organize information through the use of the experts' own predetermined inquiries, warnings and macros in a computer system which can then be easily used by persons having less expertise in the field, through an automatic, interactive process. Thus, there is also a need for a system that will allow an individual who has expertise in a field, but who does not have computer programming ability, to be able to produce data, macros, inquiries and warnings that elicit information and integrate it into a useful form, and can therefore subsequently be used by persons ("users") not having expert knowledge in the field. Systems satisfying this need should follow an easily definable tree structure which makes decisions based on responses of the user to obtain additional information.

A facility for placing "windows" on the monitor screen of a computer system is also provided in many word processing systems. A window can present a message for the user, or present the user with a series of choices or selections. The choices are defined by the system developer, however, and cannot be defined or edited by the operator. This limits the usefulness of the window facility in developing systems which elicit information from the user in circumstances such as the taking of a medical history, where the appropriate question sequence depends on the question(s) previously asked and the responses received, and the particular desires or record keeping style of an individual attending physician. Thus, there is a need for word processing systems having integrated operator-defined messages and choices which appear in operator-defined windows, for obtaining and recording desired information. There is also a need for systems which automatically position the windows on the screen in such a way that they are always in a convenient location for the user to see without additional eye movement, which wastes time and breaks the attention span.

An expert operator can develop a form for use with known word processing systems. Once developed, the form can be used and completed by others, including people having less knowledge of the subject matter of the form than that of the expert operator who developed the form. For example, a doctor or lawyer can design a form which can later be used by staff personnel. However, the staff person later using the system to complete the form must control the system, commanding it to search for terms, and perform various required functions. This requires a relatively high level of skill by the user. Thus, there is also a need for word processing systems which allow the expert operator, such as a lawyer or physician, to define a series of inquiries and warnings to be considered automatically by the expert and other users in obtaining desired information and performing desired tasks, without simultaneously requiring the user to be as knowledgeable about the subject matter of the form as the expert who developed the form. Such systems should define tree structures which can change the configuration of the forms produced when certain responses are given, so that the system is more flexible than printed forms.

Yet another problem with known systems is that they cannot be controlled by an expert to interact with the user, providing information in a way which insures that the user does not miss questions, fail to address warnings, or follow up a question with appropriate subsequent questions which are determined by the response to the previous question. Thus, there is a need for word processing systems which the expert can design to interact with the user to insure that all required inquiries are made, all warnings are addressed, and all responses are fully and logically addressed.

Accordingly, one object of an example of this invention is to provide new and improved methods and apparatus for recording information obtained in response to predetermined inquiries and warnings.

Another object is to provide new and improved systems for recording data which are relatively efficient and fast, and produce more accurate results, which can be easily updated to reflect newly-acquired information in a field such as medicine or the like, and are flexible and adaptable to various fields, such as law, insurance or any other field.

A further object is to provide new and improved word processing systems which contain expert information facilities that are highly flexible and adaptable to the record keeping styles and preferences of different individuals with different perceptions of their needs, even within the same professional area or physical location.

Another object is to provide new and improved computer systems for creating information records utilizing operator-defined dialog boxes in an operator-defined tree structure of inquiries and warnings, in conjunction with an integrated word processing program, for operators who are not computer programming experts, thus saving programming time and expense.

Still another object is to provide new and improved word processing systems in which the operator can automatically cause a variety of different operator-defined inquiries, warnings and the like to appear on the screen when a selected set of characters is located in a document.

A further object is to provide new and improved macro systems which can be invoked at desired times without the user having specific knowledge as to the content of the macros, their location in the document where they should be used, or the manner in which they are invoked. Such systems should preferably operate automatically, with little or no effort or knowledge on the part of the user. Such macros should also preferably control the subsequent decision tree path of the remainder of the document.

A still further object is to provide new and improved computer systems in which the operator can (1) cause operator-defined inquiries, responses, warnings and the like to appear on the screen when a selected character is located in a document, (2) cause operator-defined macros to be integrated into the inquiries and executed in connection with the responses to inquiries, and (3) select additional warnings and inquiries which can be determined by responses to previous inquiries.

Yet another object is to provide new and improved word processing systems having integrated operator-defined messages and choices which appear in windows which are automatically positioned to limit user eye movement and maintain user awareness when the following window is presented, improving user response time, preventing fatigue and increasing accuracy.

Another object is to provide new and improved word processing systems which allows the operator to define a series of inquiries and warnings to be considered by the user in obtaining desired information, and performing desired tasks.

Still another object is to provide new and improved word processing systems which define tree structures which can change the configuration of forms produced when certain responses are given, so that the system is more flexible than printed forms.

Yet another object is to provide new and improved word processing systems which interact with the user to insure that all required inquiries are made and all warnings are addressed.

In one aspect of this invention, methods and apparatus are provided for obtaining and recording information by presenting selected data, warnings and inquiries on a computer display monitor, prompting selected responses to the warnings and inquiries as desired, and integrating newly obtained information with other data to create a completed narrative text document. The information can be obtained by displaying sets of questions or information in an order which is predetermined, and dependent in some cases on the information obtained in response to a prior inquiry.

Apparatus of an example of the invention includes a computerized system having a processor, volatile memory such as random access memory (RAM), permanent memory such as a magnetic storage disk or the like, a keyboard, a display monitor, a printer and a program having word processing capabilities. In addition to performing word processing functions, the system can be used to create unique "dialog boxes" which can be defined by the operator. A dialog box is a subroutine which is generated by the system in accordance with instructions from the operator. The operator defines a location in the document in which a question is to be asked or information provided to the user. The operator also defines the question, and can provide several responses to the question. The operator can specify the number of answers which can be accepted in response to an inquiry, and can specify that only certain information, such as a date or the like, be provided.

The dialog boxes can be arranged in an information tree structure having multiple branches. The branches of the tree which are actually used are determined by the responses received to inquiries as information is obtained. Macros can be integrated into the tree structure, if desired. The operator's selection of sequential responses to the questions thereby determines how the document develops. As questions are answered, the information obtained is inserted into the text of the completed document, and the inquiries are erased. In this manner, the process results in an integrated, easy to understand narrative text document.

An example of the invention will now be described with reference to the accompanying drawings, in which:

FIG. 1 is a generalized block diagram illustrating the structure of a specific embodiment of a system made in accordance with the principles of this invention;

FIGS. 2 and 3 are generalized flow diagrams illustrating the methodology and structural flow of a specific embodiment of a program routine which can be used in the context of a medical record keeping system;

FIG. 4 is a detailed flow diagram for a program routine which creates and modifies abbreviations and macros;

FIG. 5 is a detailed flow diagram for a program routine for using previously assembled data to create new documents;

FIG. 6 is a detailed flow diagram for a program routine which creates and modifies processing tree structures;

FIG. 7 is a detailed flow diagram for a program routine which can be used to classify and process dialog boxes;

FIG. 8 is a detailed flow diagram for a program routine which can be used to compile warning dialog boxes;

FIG. 9 is a detailed flow diagram for a program routine which can be used to compile dialog boxes which request text and/or numeric responses;

FIG. 10 is a detailed flow diagram for a program routine which can be used to compile multiple choice dialog boxes;

FIG. 11 is a detailed flow diagram for a program routine which can be used to execute warning dialog boxes;

FIG. 12 is a detailed flow diagram for a program routine which can be used to execute dialog boxes which request text and/or numeric input;

FIG. 13 is a detailed flow diagram for a program routine which can be used to execute multiple choice dialog boxes; and

FIG. 14 is a detailed flow diagram for a program routine which controls the overall function of the word processing system in the context of a medical records keeping system.

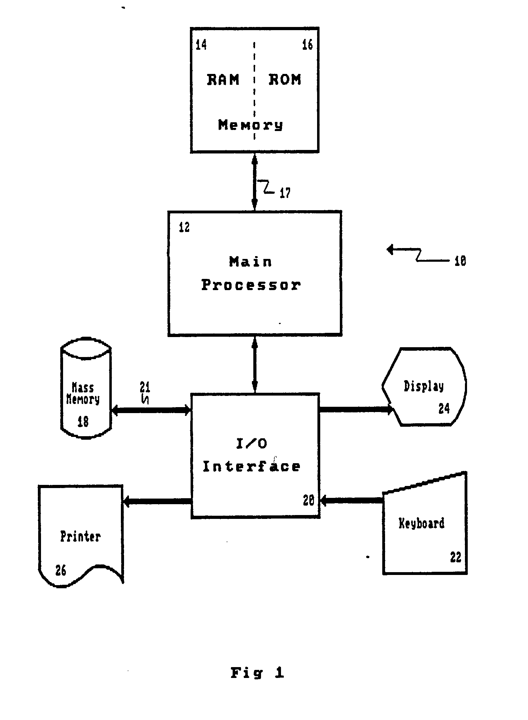

As seen in FIG. 1, apparatus 10 includes a main data processor 12, a volatile random access memory (RAM) 14, read only memory (ROM) 16 coupled to the processor by a bus 17, and a mass storage memory 18, which could be a hard disk drive, coupled to an input/output device 20 through a bus 21. A keyboard 22, a display 24 and a printer 26 are also connected to the main processor 12 through the input/output device 20. Additional peripheral devices, such as co-processors and the like, can be used with this invention, if desired.

The apparatus 10 could include an International Business Machine personal computer such as an "AT" model computer, or an IBM compatible personal computer such as the American Telephone & Telegraph Model 6300 personal computer, although it is contemplated that a mini-computer system, a main frame computer system or a dedicated discrete digital system could be used.

A disk operating system such those marketed by Microsoft Corp. under the trademark "MS-DOS" is suggested for operating the apparatus 10, although other operating systems, such as an Apple Macintosh Computer or other operating system, could also be used.

The display 24 may be a conventional LCD display or CRT screen or other suitable color or black and white display device for providing alphanumeric and/or graphic display capabilities. The keyboard 22 may include an ASCII or other suitable encoder and a separate set of letter and numeric keys and function keys to permit communication between the apparatus 10 and the person operating the apparatus 10. The printer 26 may be any of a variety of conventional printers, including laser printers, suitable for providing printed output.

The apparatus 10 includes instructions, in the form of a program, which enable the system to perform a variety of complex functions. Generally, the system can be used to record information in response to warnings and inquiries which are defined by an expert having knowledge or expertise in a selected field other than computer programming, such as medicine, law, insurance or any other field. This is accomplished through the use of expert operator-defined dialog boxes in an information tree structure having a plurality of branches.

A dialog box is a program routine which causes an operator-defined message to appear on the display screen when a pre-selected command is entered through the keyboard 22, and requests that the user enter operator-specified commands or information into the computer. The operator can specify whether the information can be entered in the form of text, numbers, or one or more operator-defined choices.

The message remains in the document until an acceptable response is entered by the user. Thus, the dialog box allows the expert operator to make the user interact with the system to elicit desired information and integrate the information into a document, without the user necessarily having the knowledge of the expert operator.

Five types of dialog boxes will be described here, although other types are contemplated.

The dialog boxes can include questions, answers and pieces of information which are included in chart formats or other forms. The dialog boxes begin with an open control character (such as a left bracket "[" or other selected character) and end with a close control character (such as a right bracket "]" or other selected character). Designated characters which follow the open control character define the dialog box as a warning dialog box, an alphanumeric question dialog box, a numeric question dialog box, a single choice question dialog box, or a multiple choice question dialog box, as will be seen. The definition characters are followed by the warnings, questions and answers which the operator defines.

The dialog boxes are invoked by pressing a selected key such as the "Tab" key, which causes the cursor to move to the open control character of the next dialog box. The program then opens a window which displays the box.

### Warning Dialog Boxes

A warning dialog box presents information to the user such as a warning, reminder or the like. This type of dialog box is defined by an exclamation point ("!"), followed by the message which is to appear on the screen. An example of a warning dialog box is shown below.
[! Check blood pressure.]

When the Tab key is pressed, the system searches for an open control character ("["). When it finds the open control character above, it continues scanning, and recognizes the dialog box when it locates the exclamation point (!). When the apparatus reaches the close control character, it confirms that it has located a warning dialog box, and the message "Check blood pressure." is displayed in a window. Additional words such as "Attention" can be used in warning dialog boxes, if desired. In the medical field, warning dialog boxes can be used to inform the user of clinical information which is pertinent to the patient type or condition, or to remind the user to give the patient certain information.

The warning dialog box remains in the document until the user enters a predetermined command, preferably one which is different than the command which normally invokes the dialog boxes, to indicate that the user has recognized the dialog box as a warning dialog box. For example, the function key F10 could be used to erase the box and continue to the next box, to insure that the user addressed the information in the box, while the "Tab" key could be used to continue to the next dialog box in other situations.

### Alphanumeric and Numeric Question Dialog Boxes

Alphanumeric and numeric question dialog boxes ask open-ended questions, and permit the user to enter either an alphanumeric answer which can include both text and numbers, or a numeric answer, such as a date. An alphanumeric dialog box is defined by a question mark "?" inside the opening control bracket, as seen in the example shown below.
[?What did the patient eat today?]

When the Tab key is pressed and the apparatus locates the open control character shown above, the system defines the type of dialog box by the first question mark, and a window appears on the screen with the question placed on the top of the window. The user can type in the answer to the question. When the answer is complete, the Tab key is pressed, the answer is then inserted into the text, the window is erased and the box is deleted from the text. The cursor automatically goes to the next open control character.

If a pound sign "#" is used to define the dialog box, only a numeric answer will be accepted. For example, in the following dialog box:

[#How old was the patient's father when he died?],

the system would only accept a numerical answer to the question. The answer would be inserted in the document in place of the dialog box, the window would be removed from the screen, and the box would be deleted.

### Single Choice and Multiple Choice Question Dialog Boxes

A single choice question dialog box asks a question and presents the user with a menu of several expert operator-defined answers, only one of which can be selected and placed in the text of the document in place of the dialog box. These dialog boxes can be identified by the characters ">1". The general form of a single choice dialog box is shown below.

[>1 Marital Status {married}{single}{divorced}]

As seen above, each answer is contained between a pair of braces ("{ }"). The user can only accept one of the answers. If a second answer is selected, the first answer is disregarded.

A multiple choice question box can be defined by a ">*" character set, and may be created in the form shown below.

[>*Complained of {vomiting,} {weakness,} {loss of sleep,}]

Again, the answers are between braces but in this case more than one answer may be selected, and each selected answer will be inserted in the text. The punctuation is included in the answer, and is used so that the completed document will be properly punctuated.

Various functions can be provided to facilitate the use of the dialog boxes. For example, "Esc" can be used to ignore a dialog box, without removing it. "Ctrl" and "End", if pushed together, can be used to erase a box even if an answer has not been entered.

In the single choice and multiple choice question dialog boxes, a macro can be provided as one or more of the answers. A macro can be identified in the box by its name, preceded by a "/". An example is shown below.

[>1 Patient smokes? {/Yes.} {No.}]

The macro "/Yes" shown above is displayed when the dialog box is invoked by the user entering a "Tab" command at the appropriate time. The user is not required to know the name of the macro or other information about it to invoke and use it.

The example shown above also shows how an expert operator can define an information tree structure by combining macros with dialog boxes. If the "No" choice is selected above, the response "No" is recorded in the document, and the dialog box is erased. If the "Yes" macro is invoked, however, a second dialog box asking for more information about the patient's smoking could be invoked. Additional macros and even more dialog boxes can be included in the second box. In this manner, the dialog boxes and macros can be arranged in information tree structures where the response to a first dialog box determines whether a second dialog box is presented on the display or is deleted from the document.

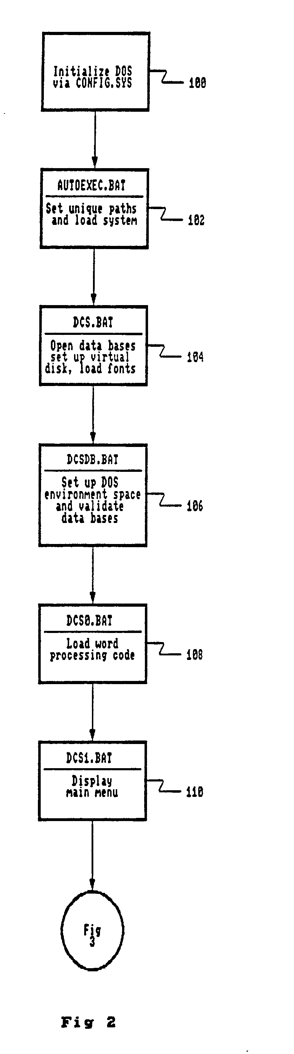

FIGS. 2 - 14 show a generalized flow diagram illustrating the methodology and structural flow for a specific embodiment of the system according to the invention. FIG. 2 shows a flow diagram for program steps which initialize the system. The operating system for the apparatus 10 is entered at entry point 100, with a bootstrap loading and environment interrogation process which provides self-installing features. A disk operating system, such as MS-DOS, is loaded, and about 40 buffers and 20 files are reserved through a CONFIG.SYS program. In addition, a virtual disk may be allocated in the RAM 14, if desired.

An AUTOEXEC.BAT program 102 is automatically executed by the disk operating system. The AUTOEXEC.BAT program defines the path of directories through which the mass memory 18 will search for programs and data. In addition, the AUTOEXEC.BAT program may be used to automatically load the remainder of the program into the RAM 14. The latter function can be accomplished through the use of DCS.BAT file 104.

The DCS.BAT file 104 opens various databases which are needed to practice the invention. It may also transfer programs to a virtual disk in the RAM 14. In addition, DCS.BAT 104 can be used to load various fonts which are used for printing.

A routine 106 is then executed to set up a suitable environment in the disk operating system, to reduce the time required to perform various functions. The routine 106 also updates various databases to reflect the current status of information in the databases. For example, the data may change the ages of various persons in the data bases.

A word processing routine 108 is then loaded into the memory 14. The word processing routine 108 includes various facilities to enter and edit text to create documents which can be displayed, printed and stored in memory.

With the word processing routine 108 installed, an operator can enter data into the RAM 14 through the keyboard 22 to create a document, edit the document as desired, and store the document in the mass memory 18. The document can be totally original, or it can be a predefined set of instructions which define how information is to be obtained and recorded, and how it can be retrieved from the memory 18 when desired. Information can be recorded to complete such documents, and the completed document can be printed or stored in memory. The original, predefined set of text and instructions can be retained in permanent memory for later use.

The code 108 also includes a facility for creating "windows" on the display screen 24 at selected times. The window can be programmed to "pop" onto the screen on command. The size of the window is determined by the amount of text to be shown in the window. The position of the window is preferably selected to minimize eye movement.

The code 108 also includes a facility for creating "macro" programs. A macro allows the operator to define a series of instructions which the computer will perform upon receipt of a specified command. Each such series of instructions is given a name, and is stored in the mass memory 18 for retrieval and execution as desired. The command can be a single keystroke, if desired.

A search function is also provided in the code 108. The search function allows the programmer to define a character which the computer apparatus will search for on command. For example, in the embodiment of the invention included in the microfiche appendix, the character "[" was chosen as a search character. Each time the "Tab" key was pressed, the program searched for the next appearance of the "[" and moved the cursor to that character.

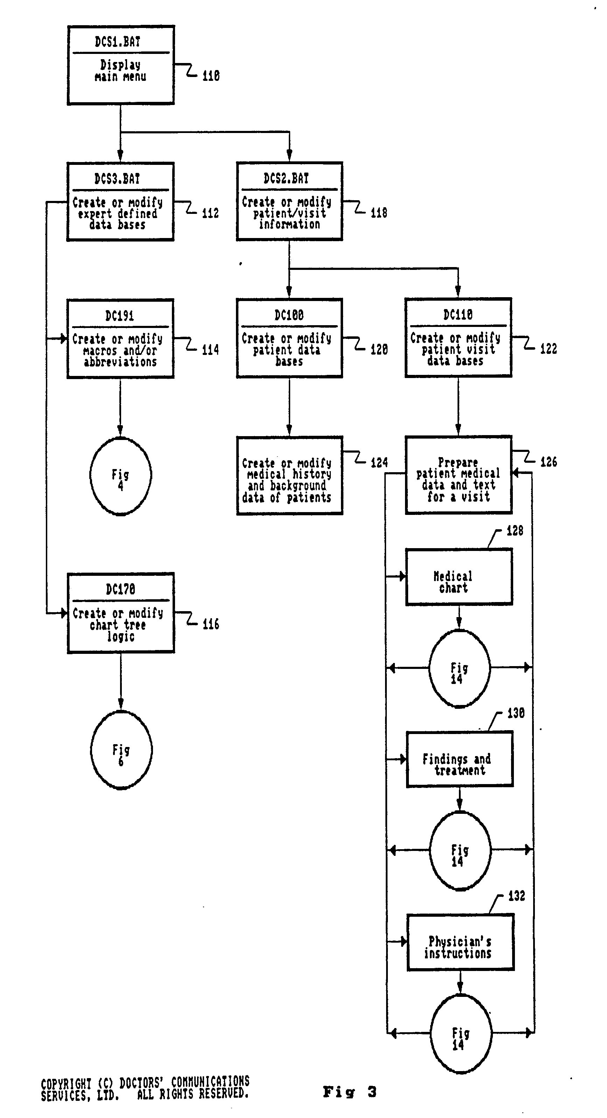

After the word processing code 108 is loaded, the operator is presented with a menu 110 (FIG. 3). The menu 110 presents several options to the operator or user. DCS3.BAT 112 may be selected from the menu, if desired, for creating or modifying the expert defined databases. DCS3.BAT 112 allows an operator having expertise in a field such as medicine, law, or the like, to elect to develop text and tree structures for use by the expert or other users in obtaining and recording desired information from different patients or clients. More specifically, the operator can create new macros by selecting a facility 114, or can create new tree structures which can include macros, inquiries and warnings, by selecting chart tree logic 116, as will be described in greater detail.

A user of the apparatus 10 can be the expert operator, another expert, or someone less knowledgeable about the field to which the information relates. The user can retrieve previously created text and tree structures, in the form of documents, and can use the documents by selecting an option 118 from the menu 110. The option 118 is used to create or modify patient/visit information in the physician's system being discussed. If option 118 is selected, the user is presented with an additional menu which provides an option to create or modify patient databases 120, and an option to maintain patient visit databases 122. If the option 120 is selected, a routine 124 for creating or modifying a patient's medical history and background data is selected.

If option 122 is selected, the user can then choose whether to create or modify a patient's medical data for a visit, by selecting routine 126. The user is then presented with the options of selecting a chart option 128, a findings and treatment option 130, or a physician's instructions option 132, all of which will also be discussed in greater detail.

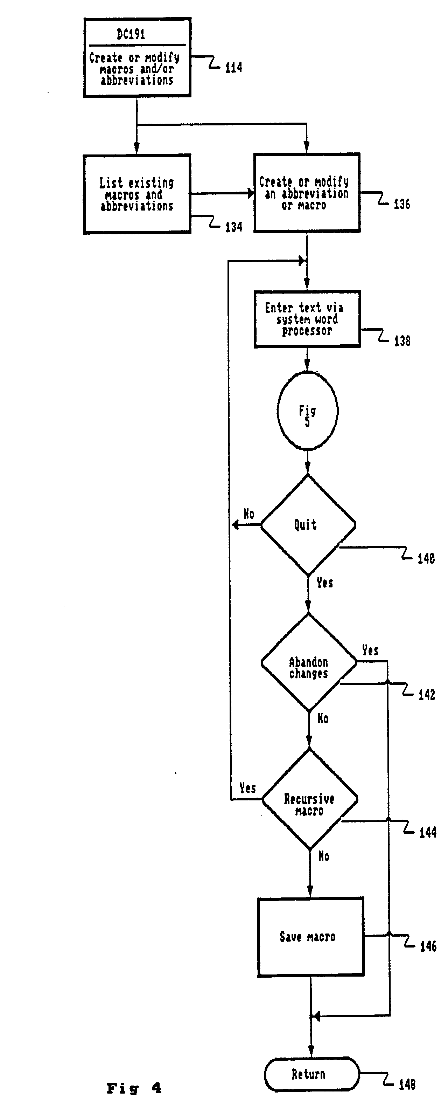

When the operator selects the create macros and abbreviations option 114 (FIG. 4), a routine DC191 (invoked by the command "RUNC DC191" in the microfiche appendix) displays a menu of additional selections which appears on the display 24. The operator can create a list of existing macros and abbreviations by invoking a routine 134. In the alternative, the expert operator can select a specific macro or abbreviation to add or modify by selecting a routine 136, which can also be invoked from the list of existing macros and abbreviations produced by routine 134.

When routine 136 is selected, access is provided to the word processing code 108 through a routine 138. The operator may then enter text as desired. All word processing functions and dialog box features of the code 108 are available to the operator. The code 108 can be used to create dialog boxes by entering the open control character ("["), a dialog box definition character ("!,?,#,>1,or >*"), the warnings, questions and possible responses to be displayed in the dialog box, and the close control character ("]"). When text entry is completed, a function key identified on the screen may be pressed to exit the word processor 108, as seen at 140 in FIG. 4. The operator then has the option of abandoning changes at 142. If the changes are not abandoned, a recursive macro diagnostic routine 144 is invoked to prevent a macro from later invoking itself endlessly.

The macro may be saved through routine 146. A return routine 148 returns control to the menu 112, or other desired location in the program.

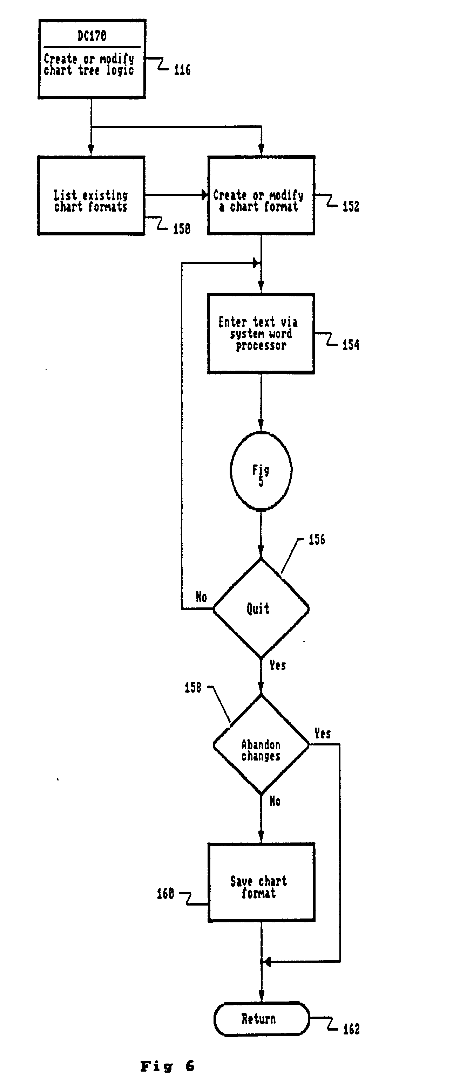

The expert operator may also create an entire document, such as a chart or form for physicians, by selecting routine 116 in FIG. 3 ("RUNC DC116" in the microfiche appendix), as shown in greater detail in FIG. 6. Existing charts or forms can be listed by invoking routine 150, or the operator can elect to create or modify a specific chart by selecting routine 152, with or without first listing the charts with the routine 150.

When routine 152 is selected, the expert operator can enter text through the word processing code 108. When the entire text for the new chart or form is entered and edited, through routine 154, the expert operator can elect to quit at 156 (FIG. 6), and can abandon the new document or changes in the document at 158, or save the new or revised document, as at 160. The expert operator may then return to the main menu 112 by entering a return command 162.

In the context of a medical record keeping system, a non-expert user, such as a staff member, first creates a patient background history at 120 and 124 and then creates a current patient visit record with routine 122. The non-expert user first selects the chart or form to be used at routine 126 for producing a detailed medical chart (routine 128); a summary of the physician's findings and treatments (routine 130); and/or a physician's instructions to the patient (routine 132).

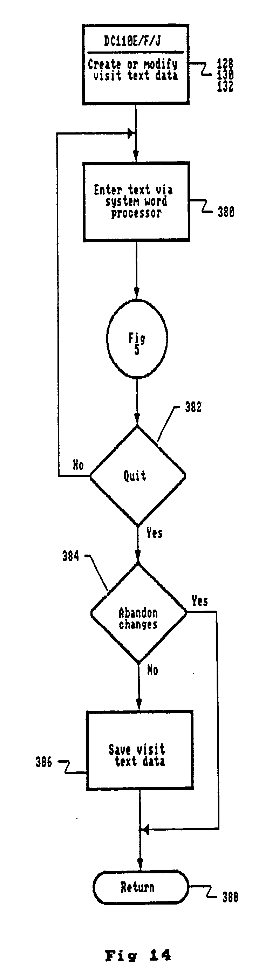

The instructions which permit the non-expert user to retrieve expert-defined data and use it to prepare individual charts (routine 128), finding and treatment documents (routine 130), and physician's instructions (routine 132) for different patients is shown in greater detail in FIGS. 3, 5 and 14. When one of those options is selected to process data, the appropriate code is retrieved from memory and loaded into the word processing code 108 by routine 380 (FIG. 14). Text can be entered at that time by entering it directly, by invoking dialog boxes or expanding macros. The user can quit by using routine 382, and can abandon changes with routine 384 or save data through routine 386. Return routine 388 sends the apparatus to routine 126.

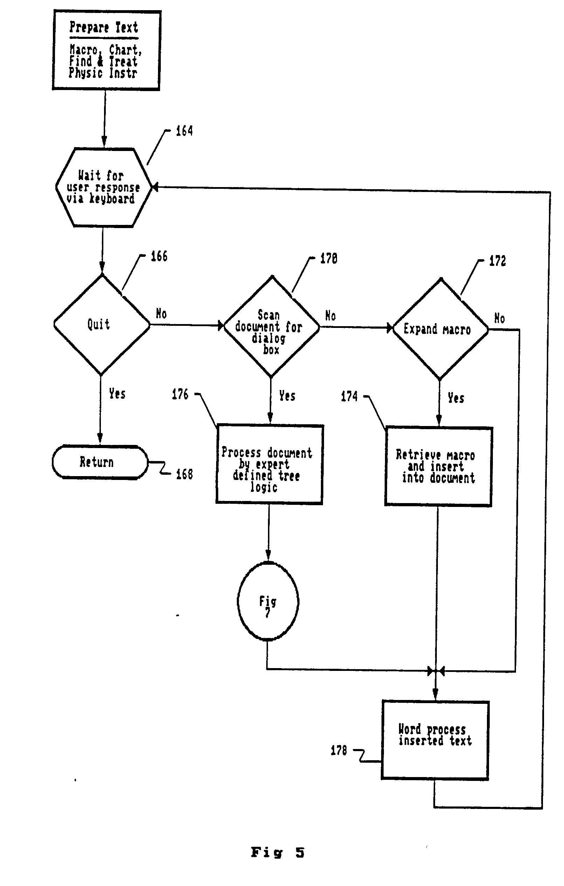

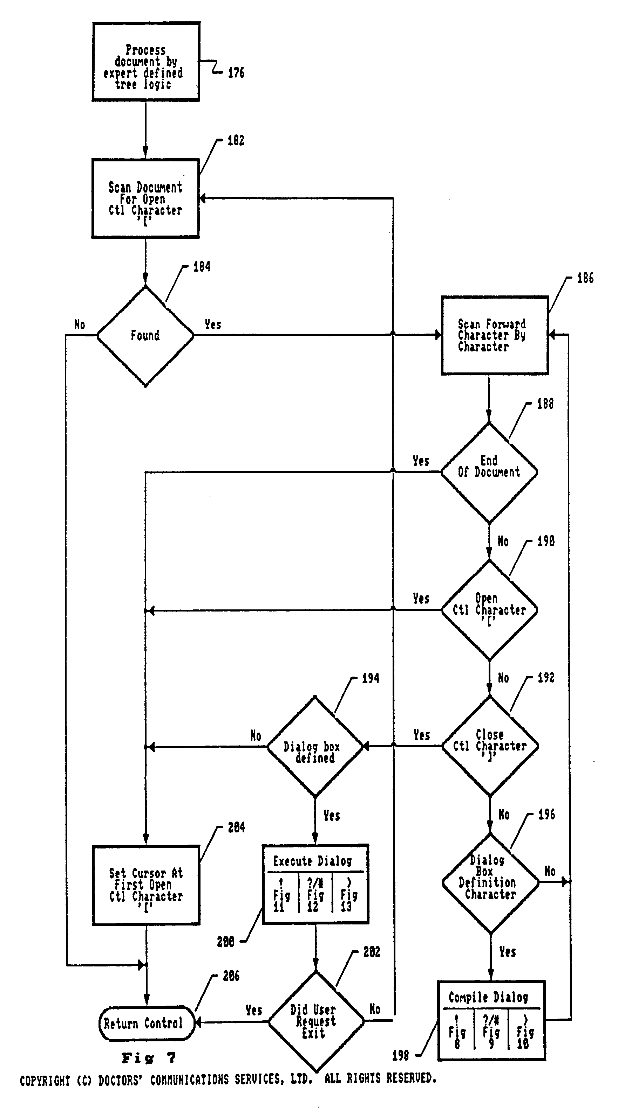

The user can invoke dialog boxes while preparing a new document from an expert-defined document by entering an appropriate command at 164 (FIG. 5). The user can return to FIG. 14 by entering a quit command at 166. The user can also scan the data for a dialog box at 170, or can elect to expand all macros which are currently included in the document at routine 172. If macros are found in the document, they are automatically retrieved and inserted into the document. If the user scans for dialog boxes and a dialog box is encountered, the user enters appropriate responses to warnings and inquiries at 176, as shown in more detail in FIG. 7.

Text can be inserted through the use of the word processing code 108 at any time during the process, as shown at 178. When the desired macros have been expanded, all dialog boxes have been addressed and the text has been word processed as needed, the processor returns to 164 in the routine to wait for an additional user response.

When the user invokes the system at 176 (FIG. 7) the document is first scanned for a selected "open" control character at 182. The open control character could be a bracket "[" or any other suitable character on the keyboard. If the apparatus finds no open control character whatsoever, it returns control to the user with the cursor set at the position where it began, through step 184.

If an open control character is found, the apparatus notes the position of the control character at 184 and scans beyond that character at 186 for the end of the document 188, another open control character 190, a close control character 192, or a dialog box definition character 196. If no additional open control characters are found in the document, no dialog definition is found, no close control character is found, and the end of the document is reached at 188, the cursor is set at the open control character found at 184, as seen in the sub-routine 204. If another open control character is found at 190, then the cursor is also set at the open control character found at 184, through the sub-routine 204. If the apparatus detects a close control character at 192, but discovers at 194 that no dialog box has yet been defined, then the cursor is set at the open control character found at 184 through the sub-routine 204.

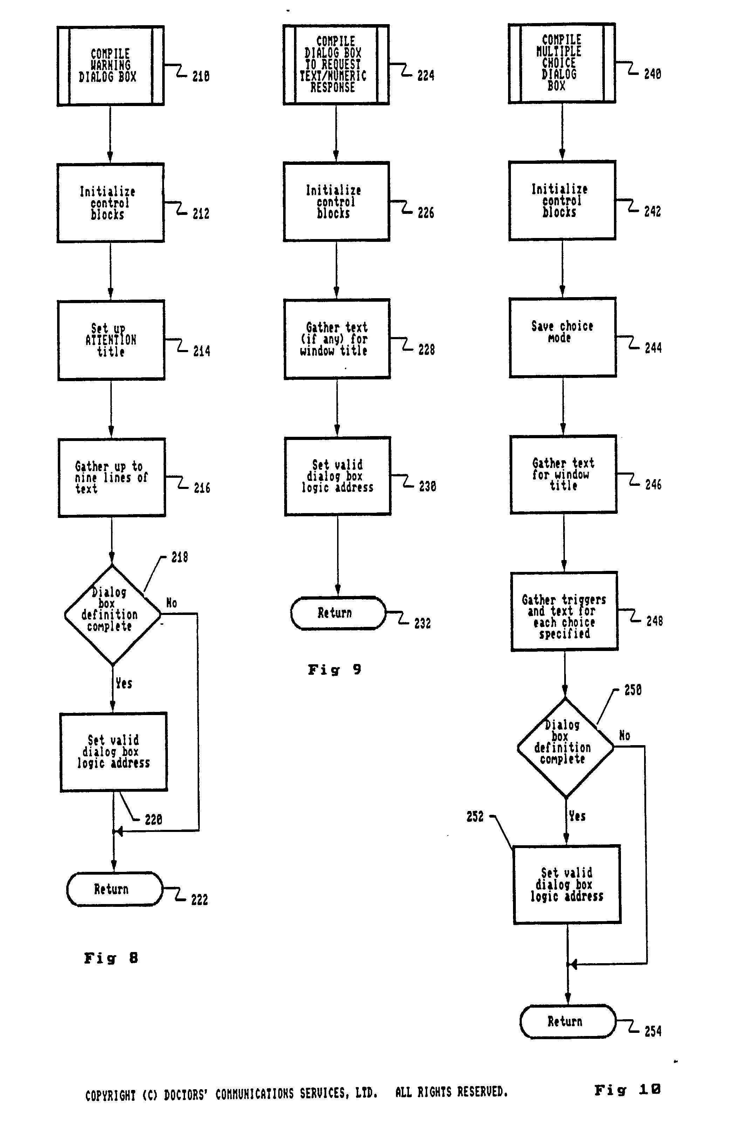

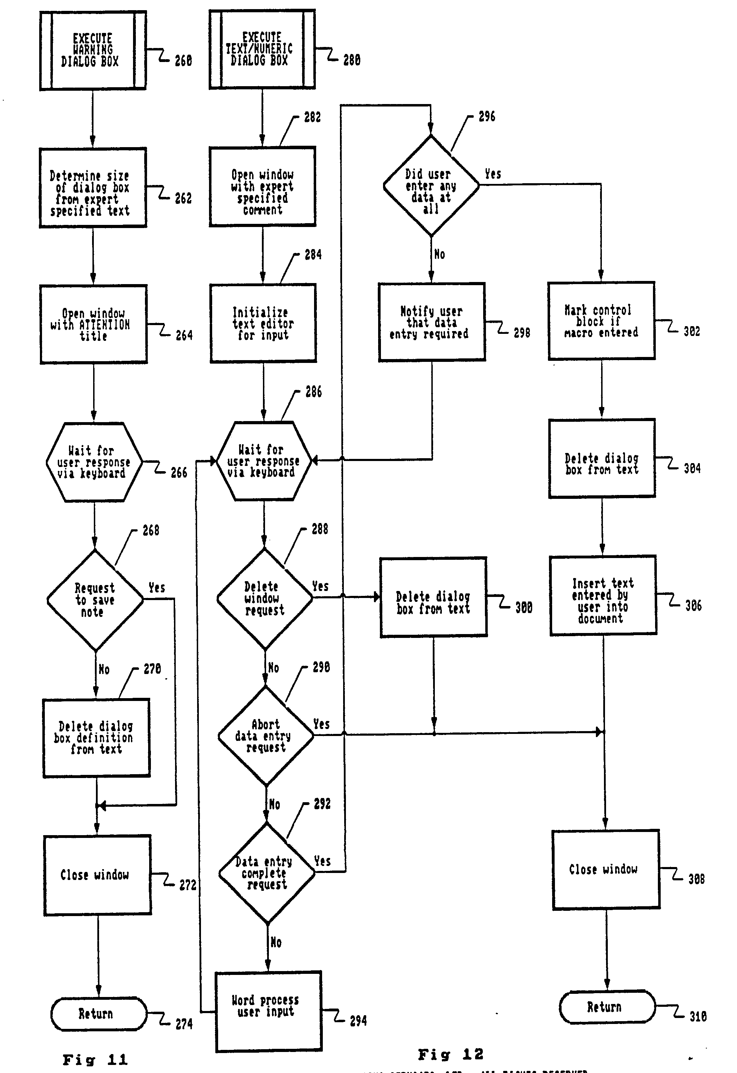

If, on the other hand, a dialog box definition character is identified at 196, then the apparatus proceeds to 198 to execute code which defines the dialog box as a warning or other type of dialog box and compiles it, in the manner seen in FIGS. 8, 9 and 10. If the character does not define a dialog box, then the apparatus bypasses the character and continues to scan at 186. If a close control character was discovered at 192 and it was determined at 194 that a dialog box had been defined, then the apparatus proceeds to 200 and executes the appropriate code for the dialog box, as shown in FIGS. 11, 12 and 13.

When the user properly responds to the dialog box, the apparatus determines whether the user has requested an exit from the system at 202. If so, the apparatus returns control to the user at step 206. If not, the system returns to the routine 182 to scan the document for an open control character.

When the apparatus is in the mode 198 of determining whether a dialog box definition character actually defines a dialog box or is being used for some other purpose, it first determines which type of dialog box definition character has been identified. If the character identifies a warning box, then the apparatus proceeds as shown in FIG. 8. The apparatus begins at sub-routine 212 by initializing the appropriate control blocks to identify the dialog box for later execution. The subroutine 214 then creates a title of "Attention" which will be used on the dialog box, and proceeds to gather up to nine lines of text as originally defined by the expert operator, at 216. If it is confirmed that a warning dialog box has been fully defined, at 218, then a logical address is set at 220 for displaying the dialog box at a later time. If, however, the dialog box definition is found to be incomplete, no address is set and control is returned to the compile routine 198 (FIG. 7) through routine 222 (FIG. 8).

If a character which identifies an alphanumeric or numeric dialog box ("?" or "#") has been located at 196, the apparatus determines whether the character is actually part of a dialog box through routine 198 in FIG. 7 and routine 224 in FIG. 9. Routine 226 initializes the control blocks necessary to display the dialog box in a window. In routine 228, text, if any, for a window title is identified, and in routine 230 a valid address is designated for later displaying the dialog box. Routine 232 returns the program to 198 in FIG. 7.

If a character which identifies a single choice question dialog box or a multiple choice question dialog box (">") has been identified, then FIG. 10 is entered at 240, and the control blocks necessary to display the multiple choice dialog box are initialized at 242. The system determines at routine 244 whether the dialog box accepts a single response (">1") or multiple responses (">*"). The text which is to be used for the title of the window used to display the choices is gathered at 246, and the optional choice triggers and text to be used to display each choice that the user will be allowed to choose from are defined in routine 248. Routine 250 determines whether or not a complete dialog box has been defined. If one has not been defined, then control is returned to routine 198 in FIG. 7 through return 254 in FIG. 10. Otherwise, the system sets an address for later displaying the multiple choice dialog box and then returns again to FIG. 7 through routine 254.

Returning again to FIG. 7, if a close control character ("]") is identified and a dialog box has previously been defined, then the apparatus proceeds to routine 200, where it retrieves the address previously provided by the dialog box definition routines in FIGS. 8, 9 and 10, and executes the code necessary to display the dialog box and accept appropriate operator responses.

If the dialog box is a warning dialog box, the program enters FIG. 11 through routine 260. Routine 262 determines the size of the dialog box based on the amount of text that was defined for the dialog box, and proceeds at routine 264 to open a window on the display screen with the word "Attention" as the title. Routine 266 waits for the user's response at the keyboard, which is a command which is not ordinarily used at that point in the document preparation process, so the user does not inadvertently ignore the warning dialog box. Once the user has responded, the code determines whether to save the dialog box in the document or delete it through routine 268. If the user elects to delete the warning, the dialog box definition is deleted from the document by the routine 270. The window is then closed by routine 272, and the program returns to FIG. 7 through routine 274.

If an alphanumeric or numeric question dialog box was previously defined in FIG. 9, the routine 200 in FIG. 7 sends the program to routine 280 in FIG. 12. Routine 282 opens a window with the expert operator's specified comment. Routine 284 then proceeds to initialize the word processing code 108 so that it will accept input to a window as opposed to the general text editing screen. Then, at routine 286, the program waits for the user's response to the question or inquiry made by the dialog box.

When the user makes an appropriate response, routine 288 determines whether the user entered a command to delete the window request. If that is the case, routine 300 deletes the dialog box definition from the text, routine 308 closes the window, and routine 310 returns the apparatus to routine 202 in FIG. 7. If the user does not elect to delete the window request at routine 288, the user can enter a command, evaluated by the routine 290, to request that the dialog box be passed over without deleting it. If that option is selected, then the system will proceed to routine 308 to close the window, and return at 310 to the invoking code in FIG. 7.

If the user does not abort the data entry process through routine 290, and enters a command evaluated by the routine 292 that data entry is complete, then the program proceeds to determine whether the user entered any data at all, through routine 296. If he has not, routine 296 notifies the user at 298 that data entry is required, and the system waits for an appropriate user response at 286. If, however, the user has entered data at that point, routine 296 proceeds to routine 302 to mark control blocks for the dialog box to indicate whether or not a macro has been entered by the user. Then routine 304 deletes the dialog box from the document and inserts the text which was entered by the user into the document at the same location in the document at 306 before closing the window at 308 and returning to the invoking code in FIG. 7 at 310. If routines 288, 290 and 292 are not invoked, and text or numerals are entered, then routine 294 word processes the user's input within the dialog box window and returns the program to routine 286 to wait for an additional user response.

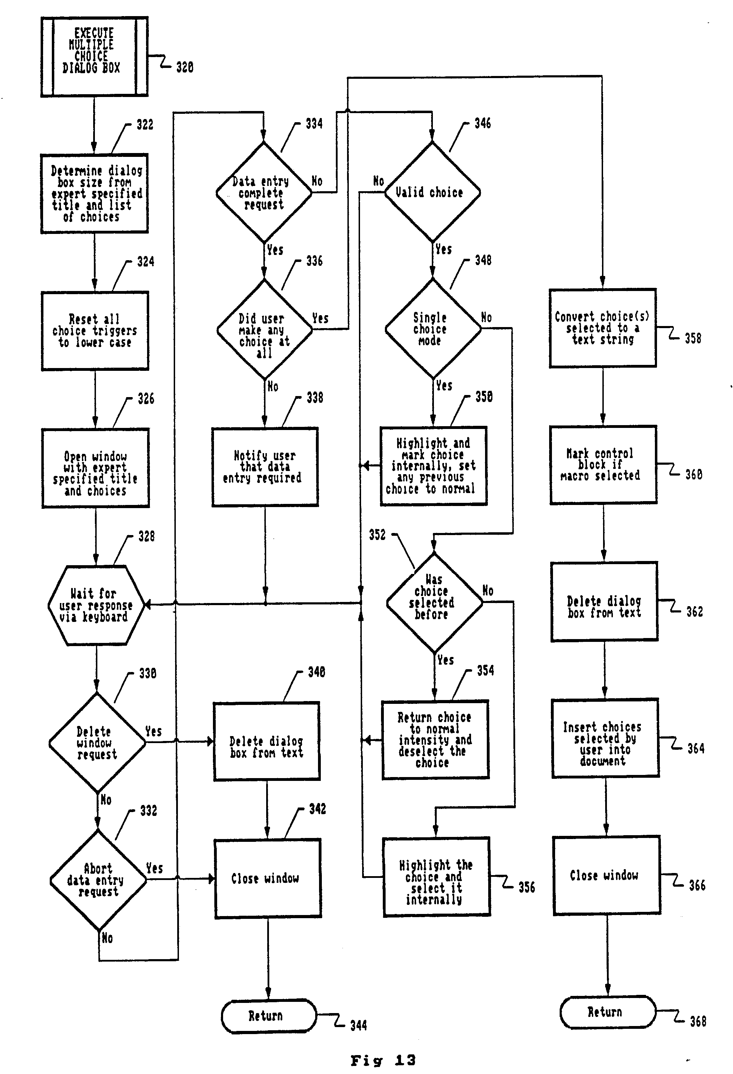

If a single or multiple choice dialog box was identified in the routines shown in FIG. 10, then routine 200 in FIG. 7 enters the single and multiple choice dialog box logic at 320 in FIG. 13. Routine 322 determines the size of the dialog box from the expert operator's title and list of choices. Routine 324 then resets the choice triggers to lower case and proceeds to open the window with the title and choices in the dialog box displayed, at 326. Routine 328 waits for a user response through the keyboard.

If the operator requests that the dialog box be deleted, it is noted at routine 330, and the dialog box is deleted from the text by routine 340. The window is closed by routine 342, and the program returns to the code in FIG. 7 through return 344. If the user chooses to abort data entry, it is noted at routine 332, the program proceeds to routine 342 and the window is closed without deleting the dialog box.

If the user signals that data entry is complete, the routine 336 determines whether the user made any choice at all. If not, then routine 338 notifies the user that a choice must be made. The system then returns to routine 328 to wait for a user response from the keyboard.

If the user selects a response shown in the dialog box at 334, but the response is not complete, then routine 346 determines if the choice that was entered is valid. If not, then no change is made on the display and the system returns to 328 to wait for an additional user response.

If the choice is valid, then routine 348 determines whether or not the dialog box was defined by the operator to accept only a single choice or to allow more than one choice to be made by the user. If only a single choice is allowed, then the system proceeds to routine 350, where it highlights the user's choice on the display 24 and marks the user's choice internally and erases any previous choices so that only the last choice made is recognized. In addition, any previously selected choice is returned to normal intensity on the display 24. Then the system returns to 328 to wait for any additional user response.

If the dialog box is defined to accept multiple responses, routine 352 determines whether or not the choice was previously selected. If not, the choice is highlighted on the display 24 and internally selected, at which point the system returns to 328 to wait for additional user response from the keyboard 22. If the choice was previously selected, however, routine 352 invokes routine 354, which toggles the choice off, returns it to normal intensity on the display 24, and internally ignores the choice before returning to 328 to wait for an additional user response.

If the user indicates at 334 that the response is complete, routine 336 determines whether any choices have been made. If so, the system proceeds to routine 358 where all the choices that were selected are converted to a single text string. Routine 360 determines whether a macro was entered or chosen, and if so, it marks the appropriate control block. Routine 362 then deletes the dialog box from the document, and routine 364 inserts the choices which were selected by the user at 364 into the document at the same point where the dialog box existed. Routine 366 closes the window and return 368 returns the system to FIG. 7.

The many advantages of this example of the invention are now apparent. Methods and apparatus are provided for recording information obtained in response to predetermined sequences of inquiries and warnings. The expert operator uses the system to cause expert operator-defined inquiries, potential responses, warnings and the like to appear in a window on the display monitor when a selected character is located in a document, and to cause expert operator-defined macros to be integrated into the inquiries and executed in connection therewith.

The system also has integrated expert operator-defined messages and choices which appear in windows for obtaining and recording desired information and performing desired tasks. Inquiries and warnings are integrated with text in an expert operator-defined information tree structure which elicits information in a logical, organized manner. The system interacts with the user to insure that all required inquiries are made and all warnings are addressed. This allows a person with expert knowledge in a subject area to design a document which can be used by a less knowledgeable person. The document will contain the expert's self-defined quality assurance and quality control elements, thus helping to insure that the response of the less knowledgeable individual is appropriate and noncontradictory.

The system is relatively fast, efficient, and cost effective. It is interactive, and produces reminders and questions which insure greater accuracy and more complete results.

The system is flexible and adaptable to various fields, such as medicine, law, insurance and other fields, and is adaptable to the individual needs, work patterns and record keeping styles of individual practitioners within a field. In addition, it enables responsible individuals to learn of new developments in their field by automatically bringing information relating to the developments to their attention when the information is needed. This can be easily accomplished by up-dating the expert operator-defined documents as developments occur by distributing updated documents to users who prepare documents from the expert operator-defined documents.

**Claims**

1. Apparatus for assembling text data to create documents comprising:
means for inputting text into the apparatus;
means for displaying the text on a monitor;
random access memory means for temporarily storing the text;
mass memory means for magnetically storing and retrieving the text;
word processing means for operating said input means, said display means, said random access memory means, and said mass memory means, in response to instructions provided through said input means;
said word processing means permitting an operator having expertise in a field other than computer programming to create, edit and store an expert operator-defined document as desired by controlling the movement of a cursor on said display means, said word processing means also permitting a non-expert user to retrieve said expert operator-defined document and create a user-prepared document from said expert operator-defined document;
means for creating a plurality of expert operator-defined dialog boxes in said expert operator-defined document, said dialog boxes including expert operator-defined messages which require expert operator-defined types of responses;
means for creating said user-defined document by causing said dialog boxes to appear on said display means when a preselected command is entered by the user, and
means for causing expert operator-defined types of responses to be incorporated into said user-prepared document, deleting said dialog boxes from said user-prepared documents,
whereby the expert operator can create a document which contains expert operator-defined messages which assist a later user of the apparatus in obtaining desired information and integrating the information into said user-prepared document, without the user necessarily having expert knowledge in the field.

2. The apparatus of Claim 1 wherein said dialog boxes can be used in an information tree structure wherein the response to a first dialog box determines whether a second dialog box is presented on said display means or is not considered when said user-prepared document is created.

3. The apparatus of Claim 1 wherein said dialog boxes are presented in a window on said display means when said cursor reaches a predetermined character.

4. The apparatus of Claim 1 comprising means for creating operator-defined macro instructions which are invoked and executed by a predetermined command, said macro instructions automatically inserting expert operator-defined data into said user-prepared document when said macro instructions are invoked by the user, whereby said macro instructions can be invoked by the user without knowing the name, location in said expert operator-defined document, or contents of said macro instructions.

5. The apparatus of Claim 1 wherein said dialog box defining means comprises means for inserting an open control character in the operator-defined document to identify the beginning of one of said dialog boxes, means for inserting after said open control character one or more selected characters which define the type of response which said dialog box will accept, means for inserting the text of said dialog box after said definition characters, and means for inserting a close control character in said dialog box.

6. The apparatus of Claim 5 comprising means for defining one or more of said dialog boxes to present an expert operator-defined warning on said display means which can only be removed from said user-prepared document by entering a predetermined command in said input means.

7. The apparatus of Claim 5 comprising means for defining one or more of said dialog boxes to present an inquiry on said display means which accepts an alphanumeric response created by the user.

8. The apparatus of Claim 5 comprising means for defining one or more of said dialog boxes to present an inquiry on said display means which only accepts a numeric response created by the user.

9. The apparatus of Claim 5 comprising means for defining one or more of said dialog boxes to present an inquiry on said display means which presents a plurality of possible responses and permits the user to incorporate only a single one of said responses in said user-prepared document.

10. The apparatus of Claim 9 comprising means for creating operator-defined macro instructions which are invoked and executed by a predetermined command, said macro instructions being automatically executed when said macro instructions are invoked by the user, said single response dialog boxes including one or more of said macro instructions.

11. The apparatus of Claim 5 wherein the expert operator can define one or more of said dialog boxes to present an inquiry which presents a plurality of possible responses and permits the user to include any number of said responses in said user-prepared document.

12. The apparatus of Claim 11 comprising means for creating operator-defined macro instructions which are invoked and executed by a predetermined command, said macro instructions being automatically executed when said macro instructions are invoked by the user, said multiple choice response dialog boxes including one or more of said macro instructions.

13. The apparatus of Claim 1 wherein said operator-defined documents are used to prepare narrative medical documents for use in the medical field.

14. A method of assembling text data to create documents comprising the steps of:
inputting text into a keyboard;
displaying the text on a monitor;
temporarily storing the text in random access memory means;
magnetically storing and retrieving the text in mass memory means;
operating said keyboard, said monitor, said random access memory means, and said mass memory means, in response to instructions provided through said keyboard, so that an operator having expertise in a field other than computer programming can create, edit and store an expert operator-defined document as desired by controlling the movement of a cursor on said monitor, and a non-expert user can retrieve said expert operator-defined document and create a user-prepared document from said expert operator-defined document;
creating a plurality of expert operator-defined dialog boxes in said expert operator-defined document, said dialog boxes including expert operator-defined messages which require expert operator-defined types of responses;
creating said user-defined document by causing said dialog boxes to appear on said monitor when a preselected command is entered by the user, and
causing expert operator-defined types of responses to be incorporated into said user-prepared document, deleting said dialog boxes from said user-prepared documents,
whereby the expert operator can create a document which contains expert operator-defined messages which assist a later user of the apparatus in obtaining desired information and integrating the information into said user-prepared document, without the user necessarily having expert knowledge in the field.

15. The method of Claim 14 comprising the step of using said dialog boxes in an information tree structure wherein the response to a first dialog box determines whether a second dialog box is presented on said monitor or is not considered when said user-prepared document is created.

16. The method of Claim 14 comprising the step of automatically presenting said dialog boxes in a window on said monitor when said cursor reaches a predetermined character.

17. The method of Claim 14 comprising the step of creating operator-defined macro instructions which are invoked and executed by a predetermined command, said macro instructions automatically inserting expert operator-defined data into said user-prepared document when said macro instructions are invoked by the user, whereby said macro instructions can be invoked by the user without knowing the name, location in said expert operator-defined document or contents of said macro instructions.

18. The method of Claim 14 comprising the steps of inserting an open control character in said operator-defined document to identify the beginning of one of said dialog boxes, inserting after said open control character one or more selected characters which define the type of response which said dialog box will accept, inserting the text of said dialog box after said definition characters, and inserting a close control character in said dialog box.

19. The method of Claim 18 comprising the step of defining one or more of said dialog boxes to present an expert operator-defined warning on said monitor which can only be removed from said user-prepared document by inputting a predetermined command.

20. The method of Claim 18 comprising the step of defining one or more of said dialog boxes to present an inquiry on said monitor which accepts an alphanumeric response created by the user.

21. The method of Claim 18 comprising the step of defining one or more of said dialog boxes to present an inquiry on said monitor which only accepts a numeric response created by the user.

22. The method of Claim 18 comprising the step of defining one or more of said dialog boxes to present an inquiry on said monitor which presents a plurality of possible responses and permits the user to incorporate only a single one of said responses in said user-prepared document.

23. The method of Claim 22 comprising the step of creating operator-defined macro instructions which are invoked and executed by a predetermined command, said macro instructions being automatically executed when said macro instructions are invoked by the user, said single response dialog boxes including one or more of said macro instructions.

24. The method of Claim 18 comprising the step of defining one or more of said dialog boxes to present an inquiry which presents a plurality of possible responses and permits the user to include any number of said responses in said user-prepared document.

25. The method of Claim 24 comprising the step of creating operator-defined macro instructions which are invoked and executed by a predetermined command, said macro instructions being automatically executed when said macro instructions are invoked by the user, said multiple choice response dialog boxes including one or more of said macro instructions.

26. The method of Claim 14 wherein said operator-defined documents are used to prepare narrative medical documents for use in the medical field.

EP 0 376 695 A2

Fig 1

```
┌─────────────────┐
│  Initialize DOS │ ⌐— 100
│  via CONFIG.SYS │
└─────────────────┘
         │
         ▼
┌─────────────────┐
│  AUTOEXEC.BAT   │
├─────────────────┤
│ Set unique paths│ ⌐— 102
│  and load system│
└─────────────────┘
         │
         ▼
┌─────────────────┐
│    DCS.BAT      │
├─────────────────┤
│ Open data bases │
│  set up virtual │ ⌐— 104
│ disk, load fonts│
└─────────────────┘
         │
         ▼
┌─────────────────┐
│   DCSDB.BAT     │
├─────────────────┤
│   Set up DOS    │
│environment space│ ⌐— 106
│  and validate   │
│   data bases    │
└─────────────────┘
         │
         ▼
┌─────────────────┐
│    DCS0.BAT     │
├─────────────────┤
│   Load word     │ ⌐— 108
│ processing code │
└─────────────────┘
         │
         ▼
┌─────────────────┐
│    DCS1.BAT     │
├─────────────────┤
│    Display      │ ⌐— 110
│   main menu     │
└─────────────────┘
         │
         ▼
      ⌜    ⌝
     (  Fig  )
     (   3   )
      ⌞    ⌟
```

Fig 2

```
┌─────────────────┐
│    DCS1.BAT     │
├─────────────────┤
│     Display     │
│    main menu    │╶╴110
└─────────────────┘
```

```
┌─────────────────┐        ┌─────────────────┐
│    DCS3.BAT     │        │    DCS2.BAT     │
├─────────────────┤        ├─────────────────┤
│ Create or modify│╶╴112   │ Create or modify│╶╴118
│  expert defined │        │  patient/visit  │
│    data bases   │        │   information   │
└─────────────────┘        └─────────────────┘
```

```
┌─────────────────┐   ┌─────────────────┐   ┌─────────────────┐
│      DC191      │   │      DC100      │   │      DC110      │
├─────────────────┤   ├─────────────────┤   ├─────────────────┤
│ Create or modify│   │ Create or modify│   │ Create or modify│
│   macros and/or │╶╴114│  patient data  │╶╴120│  patient visit │╶╴122
│   abbreviations │   │      bases      │   │    data bases   │
└─────────────────┘   └─────────────────┘   └─────────────────┘
```

```
        ╭───────╮
        │  Fig  │
        │   4   │
        ╰───────╯
```

```
┌─────────────────┐   ┌─────────────────┐
│ Create or modify│╶╴124│    Prepare    │╶╴126
│  medical history│   │ patient medical │
│  and background │   │  data and text  │
│ data of patients│   │    for a visit  │
└─────────────────┘   └─────────────────┘
```

```
┌─────────────────┐
│      DC170      │
├─────────────────┤
│ Create or modify│╶╴116
│    chart tree   │
│      logic      │
└─────────────────┘
```

```
        ╭───────╮
        │  Fig  │
        │   6   │
        ╰───────╯
```

```
                    ┌─────────────────┐
                    │                 │╶╴128
                    │     Medical     │
                    │      chart      │
                    └─────────────────┘

                        ╭───────╮
                        │  Fig  │
                        │   14  │
                        ╰───────╯

                    ┌─────────────────┐
                    │                 │╶╴130
                    │   Findings and  │
                    │    treatment    │
                    └─────────────────┘

                        ╭───────╮
                        │  Fig  │
                        │   14  │
                        ╰───────╯

                    ┌─────────────────┐
                    │                 │╶╴132
                    │    Physician's  │
                    │   instructions  │
                    └─────────────────┘

                        ╭───────╮
                        │  Fig  │
                        │   14  │
                        ╰───────╯
```

**Fig 3**

Fig 4

```
┌─────────────────┐
│ Prepare Text    │
│─────────────────│
│ Macro, Chart,   │
│ Find & Treat    │
│ Physic Instr    │
└─────────────────┘
```

┌───── 164

```
    ╱───────────╲
   ╱  Wait for   ╲
  ⟨ user response  ⟩
   ╲ via keyboard ╱
    ╲───────────╱
```

```
   ╱166          ╱170          ╱172
  ◇              ◇              ◇
 ╱ Quit ╲ No  ╱ Scan    ╲ No ╱ Expand ╲ No
 ╲      ╱──→ ╲ document ╱──→ ╲ macro  ╱──→
  ◇         for dialog     ◇
            box
  │ Yes        │ Yes         │ Yes
```

176 ─╲                    174 ─╲

```
  ⟨ Return ⟩          ┌──────────────┐     ┌──────────────┐
   ╲──── 168          │Process document│   │Retrieve macro│
                      │  by expert    │    │ and insert   │
                      │defined tree   │    │into document │
                      │   logic       │    └──────────────┘
                      └──────────────┘
```

```
                           ╭────╮
                          ╱ Fig  ╲
                         │   7    │
                          ╲──────╱
```

```
                              ┌──────────────┐
                              │ Word process │
                       178 ─╲ │inserted text │
                              └──────────────┘
```

**Fig 5**

```
┌─────────────────────┐
│      DC170          │
├─────────────────────┤
│   Create or modify  │ ⌐ 116
│   chart tree logic  │
└─────────────────────┘
```

┌─────────────────┐          ┌─────────────────┐
│  List existing  │   ───►   │ Create or modify│ ⌐ 152
│  chart formats  │          │  a chart format │
└─────────────────┘          └─────────────────┘
           ⌐ 150

┌─────────────────┐
│  Enter text via │
│   system word   │ ⌐ 154
│    processor    │
└─────────────────┘

( Fig 5 )

◇ 156
Quit — No

Yes

◇ 158
Abandon changes — Yes

No

┌─────────────────┐
│   Save chart    │
│     format      │
└─────────────────┘
160

( Return ) ⌐ 162

**Fig 6**

Process
document by
expert defined
tree logic — 176

Scan Document
For Open
Ctl Character
'[' — 182

Found — 184

No

Yes

Scan Forward
Character By
Character — 186

End
Of Document — 188

Yes

No — 190

Open
Ctl Character
'[' — 190

Yes

No — 192

Close
Ctl Character
']' — 192

Dialog box
defined — 194

No

Yes

Dialog
Box
Definition
Character — 196

No

Yes

Set Cursor At
First Open
Ctl Character
'[' — 204

Execute Dialog

| ! | ?/# | > |
|---|-----|---|
| Fig 11 | Fig 12 | Fig 13 |

200 —

Compile Dialog

| ! | ?/# | > |
|---|-----|---|
| Fig 8 | Fig 9 | Fig 10 |

198 —

Did User
Request
Exit — 202

Yes

No

Return Control — 206

**Fig 7**

COMPILE
WARNING
DIALOG BOX ⌐ 210

↓

Initialize
control
blocks ⌐ 212

↓

Set up
ATTENTION
title ⌐ 214

↓

Gather up to
nine lines of
text ⌐ 216

↓

Dialog
box
definition
complete ⌐ 218 —No—→

↓ Yes

Set valid
dialog box
logic address

⌐ 220

↓

Return ⌐ 222

**Fig 8**

---

COMPILE
DIALOG BOX
TO REQUEST
TEXT/NUMERIC
RESPONSE ⌐ 224

↓

Initialize
control
blocks ⌐ 226

↓

Gather text
(if any) for
window title ⌐ 228

↓

Set valid
dialog box
logic address ⌐ 230

↓

Return ⌐ 232

**Fig 9**

---

COMPILE
MULTIPLE
CHOICE
DIALOG
BOX ⌐ 240

↓

Initialize
control
blocks ⌐ 242

↓

Save choice
mode ⌐ 244

↓

Gather text
for window
title ⌐ 246

↓

Gather triggers
and text for
each choice
specified ⌐ 248

↓

Dialog
box
definition
complete ⌐ 250 —No—→

↓ Yes

252 ⌐ Set valid
dialog box
logic address

↓

Return ⌐ 254

**Fig 10**

EXECUTE WARNING DIALOG BOX — 260

Determine size of dialog box from expert specified text — 262

Open window with ATTENTION title — 264

Wait for user response via keyboard — 266

Request to save note — 268
Yes
No

Delete dialog box definition from text — 270

Close window — 272

Return — 274

**Fig 11**

EXECUTE TEXT/NUMERIC DIALOG BOX — 280

Open window with expert specified comment — 282

Initialize text editor for input — 284

Wait for user response via keyboard — 286

Delete window request — 288
Yes
No

Abort data entry request — 290
Yes
No

Data entry complete request — 292
Yes
No

Word process user input — 294

Did user enter any data at all — 296
Yes
No

Notify user that data entry required — 298

Delete dialog box from text — 300

Mark control block if macro entered — 302

Delete dialog box from text — 304

Insert text entered by user into document — 306

Close window — 308

Return — 310

**Fig 12**

Fig 13

Fig 14